# EUROPÄISCHE PATENTSCHRIFT

(11) **EP 3 489 565 B1**
(45) Veröffentlichungstag und Bekanntmachung des Hinweises auf die Patenterteilung: **15.12.2021**
(21) Anmeldenummer: 18207683.6
(22) Anmeldetag: 22.11.2018
(51) Int. Cl.: F16L 41/08, F16L 41/10, E03F 5/02, E03F 3/04

(54) **ANSCHLUSSVORRICHTUNG**
CONNECTION DEVICE
DISPOSITIF DE RACCORDEMENT

(30) Priorität: 24.11.2017 DE 202017107134 U
(43) Veröffentlichungstag der Anmeldung: 29.05.2019
(73) Patentinhaber: REHAU AG + Co, 95111 Rehau (DE)
(72) Erfinder: Ciolak, Mariusz, 91052 Erlangen (DE); Hendel, Roland, 91074 Herzogenaurach (DE); Lipphardt, Tobias, 90762 Fürth (DE); Schneider, Christoph, 91074 Herzogenaurach (DE); Sieber, Jürgen, 91074 Herzogenaurach (DE)

(56) Entgegenhaltungen:
- EP-A2- 1 207 332
- WO-A1-2009/132792
- DE-A1- 2 351 499
- DE-U1-202006 005 685
- FR-A1- 2 935 329

## Beschreibung

Die Erfindung betrifft eine Anschlussvorrichtung, die einen Elastomereinsatz und einen Anschlussstutzen umfasst.

Des Weiteren betrifft die Erfindung ein Fluidleit-, -aufnahme- und -speichersystem mit einer solchen Anschlussvorrichtung.

Eine gattungsgemäße Anschlussvorrichtung, die einen Elastomereinsatz und einen Anschlussstutzen umfasst, ist aus der DE 20 2006 005 685 U1 bekannt. Eine solche Anschlussvorrichtung ist geeignet, eine Nebenrohrleitung fluiddicht an eine Queröffnung in einer Hauptleitung, einem Schacht oder einer Wand anzuschließen. Derartige Anschlussvorrichtungen müssen sicher installierbar und dauerhaft sein und eine hohe Fluiddichtheit aufweisen.

Zur Herstellung der Anschlussvorrichtung wird zunächst der Elastomereinsatz in die Queröffnung einer Hauptleitung, eines Schachtes oder einer Wand eingesetzt, und anschließend der Anschlussstutzen in den Elastomereinsatz eingeschraubt, um die Außenfläche des Elastomereinsatzes möglichst großflächig an die Laibung der Queröffnung anzupressen.

Zum Einschrauben ist an der Innenseite des hohlstopfenförmig ausgebildeten Elastomereinsatzes ein Innengewinde ausgebildet, entsprechend an der Außenseite des Anschlussstutzens ein Außengewinde. Zum Einschrauben des Anschlussstutzens in den Elastomereinsatz zur Bildung der Anschlussvorrichtung wird im Allgemeinen ein Drehwerkzeug benutzt.

Es hat sich herausgestellt, dass die Fluiddichtheit einer solchen Anschlussvorrichtung in manchen Fällen unzureichend ist, da gegebenenfalls Undichtigkeiten auftreten und daher verbesserungsbedürftig ist.

So kann es in besonderen Fällen vorkommen, dass Fluid sich einen Weg sucht zwischen dem Außengewinde an der Außenseite des Anschlussstutzens und dem Innengewinde an der Innenseite des Elastomereinsatzes und unerwünscht aus der Anschlussvorrichtung nach außen oder von außen in die Anschlussvorrichtung dringt.

WO2009/132792 A1 offenbart eine Anschlussvorrichtung mit einem Elastomereinsatz dessen Innenseite einen Schraubbereich aufweist und mit einem Anschlussstutzen mit Aussengewinde, wobei Innengewinde und Aussengewinde konisch ausgebildet sind.

Die EP1207332 A2 offenbart eine Anschlussvorrichtung mit einem Elastomereinsatz dessen Innenseite einen Schraubbereich aufweist und mit einem Anschlussstutzen mit Aussengewinde, wobei der Elastomereinsatz und der Anschlussstutzen sich innerhalb eines Hauptrohrs erstrecken.

Hier setzt die Erfindung ein, der die Aufgabe zugrunde liegt, eine verbesserte Anschlussvorrichtung bereitzustellen, die gegenüber der bekannten Lösung des Standes der Technik eine verbesserte Fluiddichtheit aufweist.

Eine weitere Aufgabe der Erfindung ist es, ein Fluidleit-, -aufnahme- und -speichersystem bereitzustellen, welches eine solche Anschlussvorrichtung umfasst.

Die erste gestellte Aufgabe wird durch die Anschlussvorrichtung gemäß Anspruch 1 gelöst. Es ist im Rahmen der vorliegenden Erfindung vorgesehen, dass die Anschlussvorrichtung für eine Nebenrohrleitung in Kombination mit einer Queröffnung in einer Hauptrohrleitung, in einem Schacht oder in einer Wand einen hohlstopfenförmigen, relativ weichen Elasto-mereinsatz und einen relativ härteren Anschlussstutzen umfasst, wobei der Elastomereinsatz, dessen Außenseite an die Queröffnung angepasst ist, an seiner Innenseite einen Schraubbereich aufweist, in die ein Anschlussstutzen einschraubbar ist, und der Anschlussstutzen ein Eingriffsende, einen Mittelteil mit Außengewinde, einen Aufnahmeabschnitt und ein Antriebsende.

Die erfindungsgemäße Anschlussvorrichtung zeichnet sich dadurch aus, dass die Innenseite des Elastomereinsatzes und die Außenseite des Mittelteils des Anschlussstutzens jeweils als Zylindermantelflächen ausgebildet sind, derart, dass der Anschlussstutzen in den Elastomereinsatz einschraubbar ist, wobei bei montierter Anschlussvorrichtung zunächst der Anschlussstutzen in den Elastomereinsatz bis zu einer ersten Einschraubstellung eingeschraubt ist, ohne dass der Endabschnitt des Elastomereinsatzes in Richtung des Aufnahmeabschnitts des Anschlussstutzens verlagert ist, und anschließend der Anschlussstutzen in den Elastomereinsatz bis zu einer zweiten Einschraubstellung eingeschraubt ist, wodurch der Endabschnitt des Elastomereinsatzes in Richtung des Aufnahmeabschnitts des Anschlussstutzens verlagert ist, so dass der Elastomereinsatz zumindest abschnittsweise gegen den Mittelteil des Anschlussstutzens und gegen die Laibungsfläche der Queröffnung in der Hauptrohrleitung, in dem Schacht oder in der Wand gepresst ist.

Durch das Vorsehen gemäß vorliegender Erfindung, dass bei montierter Anschlussvorrichtung, bei der der Anschlussstutzen in den Elastomereinsatz eingeschraubt ist, der Endabschnitt des Elastomereinsatzes in Richtung des Aufnahmeabschnitts des Anschlussstutzens verlagert ist, so dass der Elastomereinsatz zumindest abschnittsweise gegen den Mittelteil des Anschlussstutzens und gegen die Laibungsfläche der Queröffnung in der Hauptrohrleitung, in dem Schacht oder in der Wand gepresst ist, ist eine verbesserte Anschlussvorrichtung geschaffen, die eine erhöhte Fluiddichtheit aufweist.

Hierdurch ist der am Elastomereinsatz ausgebildete Endabschnitt komprimiert, so dass eine radiale Spannung generiert wird, die den Elastomereinsatz zumindest abschnittsweise, insbesondere aber dessen Endabschnitt gegen den Mittelteil des Anschlussstutzens und gegen die Laibungsfläche der Queröffnung der Hauptrohrleitung, des Schachtes oder der Wand presst und so Fluiddichtheit herstellt.

So kann insbesondere Fluid, das zwischen den Anschlussstutzen und den Elastomereinsatz gelangt, aufgrund vorstehend gemachten Ausführungen nicht weiterwandern, und nicht unerwünscht aus der Anschlussvorrichtung austreten bzw. von außen in die Anschlussvorrichtung eintreten.

Im Rahmen der vorliegenden Erfindung kann es sich als überaus günstig erweisen, wenn vorgesehen ist, dass die erste Einschraubstellung und / oder die zweite Einschraubstellung an dem Elastomereinsatz und / oder an dem Anschlussstutzen markiert ist bzw. sind. Vorteilhaft können dazu Markierungen beispielsweise in Form von Zeichen vorgesehen sein, die signalisieren, wie weit der Anschlussstutzen in den Elastomereinsatz einzuschrauben ist, dass die zweite Einschraubstellung erreicht ist, wodurch die erhöhte Fluiddichtheit resultiert.

Als überaus günstig kann es sich bei der vorliegenden Erfindung erweisen, wenn vorgesehen ist, dass die Anschlussvorrichtung derartig ausgebildet ist, dass an der Außenseite des Elastomereinsatzes wenigstens ein Dichtelement, bevorzugt eine Mehrzahl von Dichtelementen, angeordnet ist bzw. sind.

Das bzw. die an der Außenseite des Elastomereinsatzes angeordneten Dichtelemente stellen beim Anpressen des Elastomereinsatzes an die Laibungsfläche der Queröffnung in der Hauptrohrleitung, in dem Schacht oder in der Wand bei sachgerecht eingeschraubten Anschlussstutzen, also wenn die zweite Einschraubstellung beim Einschrauben erreicht ist, eine hohe Fluiddichtheit der erfindungsgemäßen Anschlussvorrichtung sicher.

Ganz besonders vorteilhaft kann bei der gemäß vorliegender Erfindung vorgeschlagenen Anschlussvorrichtung vorgesehen sein, dass wenigstens ein Dichtelement ein unter Zutritt von Feuchtigkeit oder Wasser expandierendes Dichtelement ist.

Ein unter Zutritt von Feuchtigkeit oder Wasser expandierendes Dichtelement kann eine etwaige Leckage, also das Eindringen von Feuchtigkeit oder Wasser durch seine Expansion aufhalten und so das unerwünschte Wandern von Wasser bzw. eine etwaige Leckage verhindern.

Bei der vorliegenden Erfindung kann in besonders günstiger Weise vorgesehen sein, die Anschlussvorrichtung derart fortzubilden, dass an der Innenseite des Elastomereinsatzes wenigstens ein Dichtelement ausgebildet ist.

Durch die Ausbildung wenigstens eines Dichtelements an der Innenseite des Elastomereinsatzes kann eine besonders hohe Fluiddichtheit der erfindungsgemäßen Anschlussvorrichtung gewährleistet werden, da durch diese Maßnahme auch der Durchtritt von Wasser zwischen dem Elastomereinsatz und dem in diesen eingeschraubten Anschlussstutzen unterbunden, zumindest aber wesentlich vermindert werden kann.

Als besonders vorteilhaft kann sich eine Anschlussvorrichtung gemäß vorliegender Erfindung erweisen, bei der vorgesehen ist, dass der Elastomereinsatz zumindest abschnittsweise eine zweischichtig ausgebildete Wandung aufweist, wobei bevorzugt die Außenseite des Elastomereinsatzes aus einem weicheren Material besteht oder ein weicheres Material enthält als die Innenseite des Elastomereinsatzes, wo der Schraubbereich ausgeformt ist. Eine derartige Anschlussvorrichtung ist in besonderem Maße fluiddicht, da das Material an der Innenseite des Elastomereinsatzes, wo der Schraubbereich ausgeformt ist, härter ist, als das Material an der Außenseite Elastomereinsatzes, so dass der Elastomereinsatz zumindest abschnittsweise gegen den Mittelteil des Anschlussstutzens und gegen die Laibungsfläche der Queröffnung in der Hauptrohrleitung, in dem Schacht oder in der Wand mit erhöhter Anpresskraft gepresst ist, wenn der Anschlussstutzen in den Elastomereinsatz bis zur zweiten Einschraubstellung eingeschraubt ist.

Durch die Auswahl der Härte des Materials des Elastomereinsatzes kann beim Einschrauben des Anschlussstutzens in den Elastomereinsatz eine erhöhte Anpresskraft aufgebracht werden.

In besonders vorteilhafter Weise kann bei der vorliegenden Erfindung vorgesehen sein, dass der Elastomereinsatz aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) ist und / oder der Anschlussstutzen aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

Derartige Elastomermaterialien bzw. Polymermaterialien sind langlebig, inert, stabil, weisen ein geringes Gewicht auf, sind einfach handhabbar, leicht installierbar und können kostengünstig bereitgestellt werden. Insbesondere ist es auf diese Weise sehr einfach, aus diesen Materialien den Elastomereinsatz bzw. den Anschlussstutzen zu bilden.

Mit Vorteil kann ein solcher erfindungsgemäßer Elastomereinsatz bzw. ein solcher erfindungsgemäßer Anschlussstutzen mit Hilfe eines Polymerformgebungsverfahrens hergestellt sein.

Insbesondere durch ein Spritzgussverfahren und / oder ein Blasverfahren und / oder ein Thermoformverfahren und / oder ein Pressverfahren kann ein derartiger Elastomereinsatz bzw, ein derartiger Anschlussstutzen leicht fertigbar sein.

Alternativ kann vorgesehen sein, dass der Elastomereinsatz und / oder der Anschlussstutzen unter Verwendung eines generativen Fertigungsverfahrens, beispielsweise durch ein 3-D-Druckverfahren, hergestellt ist.

Hierzu kann mit Vorteil ein datenverarbeitungsmaschinenlesbares dreidimensionales Modell für die Herstellung genutzt werden.

Die Erfindung umfasst auch ein Verfahren zur Erzeugung eines datenverarbeitungsmaschinenlesbaren dreidimensionalen Modells zur Verwendung in einem Herstellungsverfahren für einen Elastomereinsatz und / oder einen Anschlussstutzen. Hierbei umfasst das Verfahren insbesondere auch die Eingabe von Daten, die einen Elastomereinsatz und / oder einen Anschlussstutzen darstellen, in eine Datenverarbeitungsmaschine und die Nutzung der Daten, um einen Elastomereinsatz und / oder einen Anschlussstutzen als dreidimensionales Modell darzustellen, wobei das dreidimensionale Modell geeignet ist zur Nutzung bei der Herstellung eines Elastomereinsatzes und / oder eines Anschlussstutzens. Ebenfalls umfasst ist bei dem Verfahren eine Technik, bei der die eingegebenen Daten eines oder mehrerer 3D-Scanner, die entweder auf Berührung oder berührungslos funktionieren, wobei bei letzteren Energie auf einen Elastomereinsatz und / oder einen Anschlussstutzen abgegeben wird und die reflektierte Energie empfangen wird, und wobei ein virtuelles dreidimensionales Modell eines Elastomereinsatzes und / oder eines Anschlussstutzens unter Verwendung einer computer-unterstützten Design-Software erzeugt wird.

Das Fertigungsverfahren kann ein generatives Pulverbettverfahren, insbesondere selektives Laserschmelzen (SLM), selektives Lasersintern (SLS), selektives Hitzesintern (Selective Heat Sintering - SHS), selektives Elektronenstrahlschmelzen (Electron Beam Melting ― EBM / Electron Beam Additive Manufacturing - EBAM) oder Verfestigen von Pulvermaterial mittels Binder (Binder Jetting) umfassen. Das Fertigungsverfahren kann ein generatives Freiraumverfahren, insbesondere Auftragsschweißen, Wax Deposition Modeling (WDM), Contour Crafting, Metall-Pulver-Auftragsverfahren (MPA), Kunststoff-Pulver-Auftragsverfahren, Kaltgasspritzen, Elektronenstrahlschmelzen (Electron Beam Welding - EBW) oder Schmelzeschichtungsverfahren wie Fused Deposition Modeling (FDM) oder Fused Filament Fabrication (FFF) umfassen. Das Fertigungsverfahren kann ein generatives Flüssigmaterialverfahren, insbesondere Stereolithografie (SLA), Digital Light Processing (DLP), Multi Jet Modeling (MJM), Polyjet Modeling oder Liquid Composite Moulding (LCM) umfassen. Ferner kann das Fertigungsverfahren andere generative Schichtaufbauverfahren, insbesondere Laminated Object Modelling (LOM), 3D-Siebdruck oder die Lichtgesteuerte Elektrophoretische Abscheidung umfassen.

Die Aufgabe der vorliegenden Erfindung, ein Fluidleit-, -aufnahme- und -speichersystem anzugeben, erfährt ihre Lösung in Anspruch 8.

Das erfindungsgemäße Fluidleit-, -aufnahme- und -speichersystem umfasst eine Nebenrohrleitung, eine Hauptrohrleitung und / oder einen Schacht und / oder eine Wand, und eine Anschlussvorrichtung für eine Nebenrohrleitung in Kombination mit einer Queröffnung in einer Hauptrohrleitung, in einem Schacht oder in einer Wand gemäß vorstehender Beschreibung.

Anwendung findet die vorliegende Erfindung insbesondere im Bereich der Kanal- und Abwassertechnik.

Neben der geschilderten Anwendung gibt es weitere Anwendungsfelder in der Regenwasserbewirtschaftung, bei Hausanschlüssen, in Kläranlagen, in der Schwimmbadtechnik, in der Industrie, in der Landwirtschaft und in weiteren Bereichen.

Weitere wichtige Merkmale und Vorteile der Erfindung ergeben sich aus den Unteransprüchen, aus den Figuren und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher ausgeführt.

Die Erfindung wird anhand der beigefügten Figuren näher erläutert.

Hierzu zeigt:
- Fig. 1:: einen schematischen Querschnitt durch einen Elastomereinsatz;
- Fig. 2:: eine schematische seitliche Außenansicht eines Anschlussstutzens,
- Fig. 3a:: eine schematische teilweise geschnittene seitliche Außenansicht eines Anschlussstutzens, der in einen Elastomereinsatz bis zu einer ersten Einschraubstellung eingeschraubt ist;
- Fig. 3b:: ein Detail aus der Fig. 3a;
- Fig. 3c:: ein Detail aus der Fig. 3a;
- Fig. 4a:: eine schematische teilweise geschnittene seitliche Außenansicht einer Anschlussvorrichtung, bei der ein Anschlussstutzen in einen Elastomereinsatz bis zu einer zweiten Einschraubstellung eingeschraubt ist;
- Fig. 4b:: ein Detail aus der Fig. 4a;
- Fig. 4c:: ein Detail aus der Fig. 4a.

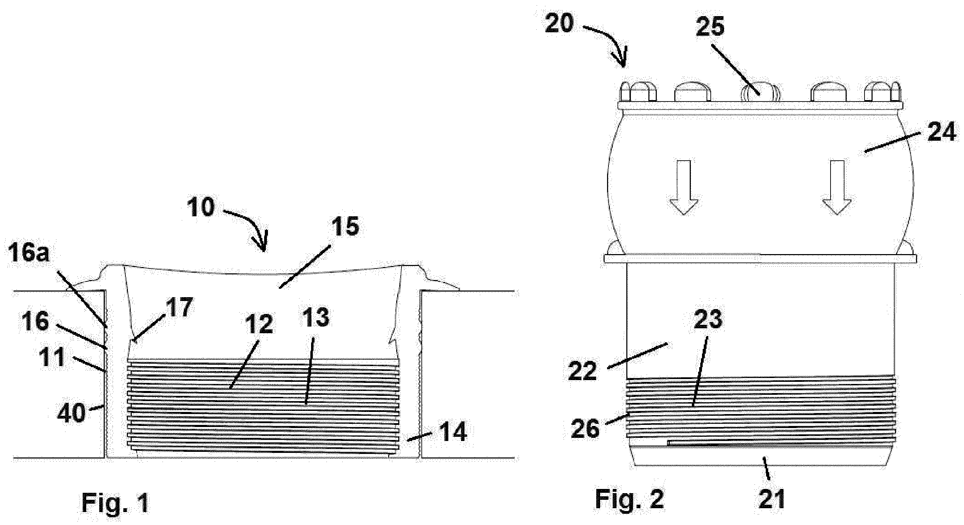

In der Fig. 1 ist ein schematischer Querschnitt durch einen Elastomereinsatz 10 gezeigt.

Der Elastomereinsatz 10 weist eine Außenseite 11 auf, die an die Queröffnung des Hauptrohres angepasst ist, in die er eingesetzt ist. Exemplarisch bezieht sich die gesamte Figurenbeschreibung auf den Einsatz der Erfindung bei einem Hauptrohr, es versteht sich jedoch von selbst, dass die Erfindung auch bei einem Schacht oder einer Wand im gleichen Umfang anwendbar ist.

Die Innenseite 12 des Elastomereinsatzes 10 weist einen Schraubbereich 13 auf, hierzu ist ein Innengewinde ausgebildet. An der Innenseite 12 des Elastomereinsatzes 10 ist weiterhin ein Dichtelement 17 in Form einer Lippe ausgebildet, welche unmittelbar angrenzend an den Schraubbereich 13 an der Innenseite 12 des Elastomereinsatzes 10 in Richtung der Öffnung 15 des Elastomereinsatzes 10 hin ausgebildet ist.

Das Dichtelement 17 steht nach innen in den Freiraum des Elastomereinsatzes 10, der durch die Innenseite 12 begrenzt wird, vor.

Das Dichtelement 17 ist entlang des gesamten Innenumfangs an der Innenseite 12 des Elastomereinsatzes 10 in gleichmäßiger Weise, insbesondere mit gleichem Querschnitt, ausgebildet.

An der Außenseite 11 des Elastomereinsatzes 10 sind zwei Dichtelemente 16, 16a ausgebildet, die entlang des gesamten Außenumfangs an der Außenseite 11 des Elastomereinsatzes 10 in gleichmäßiger Weise, insbesondere mit gleichem Querschnitt, angeordnet sind.

Die Dichtelemente 16, 16a an der Außenseite 11 des Elastomereinsatzes 10 stehen mit der Laibungsfläche 40 der Öffnung des Hauptrohres, in der der Elastomereinsatz 10 eingesetzt ist, zumindest abschnittsweise in Kontakt.

In der Fig. 2 ist eine schematische seitliche Außenansicht eines Anschlussstutzens 20 gezeigt.

Der Anschlussstutzen 20 weist ein Eingriffsende 21 auf, mit dem voran er in den Elastomereinsatz 10 einsteckbar und anschließend einschraubbar ist. Der Anschlussstutzen 20 umfasst weiterhin einen Mittelteil 22, an dem ein Außengewinde 23 ausgebildet ist. Anschließend an den Mittelteil 22 des Anschlussstutzens 20 ist ein Aufnahmeabschnitt 24 ausgebildet, der derartig ausgeformt ist, dass ein hier nicht gezeigtes Nebenrohr fluiddicht mit dem Anschlussstutzen 20 verbindbar ist.

An den Aufnahmeabschnitt 24 des Anschlussstutzens 20 grenzt das Antriebsende 25 an, an dem Fortsätze ausgebildet sind, die dazu geeignet sind, den Anschlussstutzen 20 mithilfe eines Drehwerkzeugs in den Elastomereinsatz 10 einzuschrauben.

Sowohl der Schraubbereich 13 an der Innenseite 12 des Elastomereinsatzes 10, an dem ein Innengewinde ausgebildet ist, wie auch das Außengewinde 23 des Anschlussstutzens 20 an dessen Mittelteil 22 sind zylindrische Gewinde, die maßlich zueinander passen, so dass der Anschlussstutzen 20 in den Elastomereinsatz 10 einschraubbar ist.

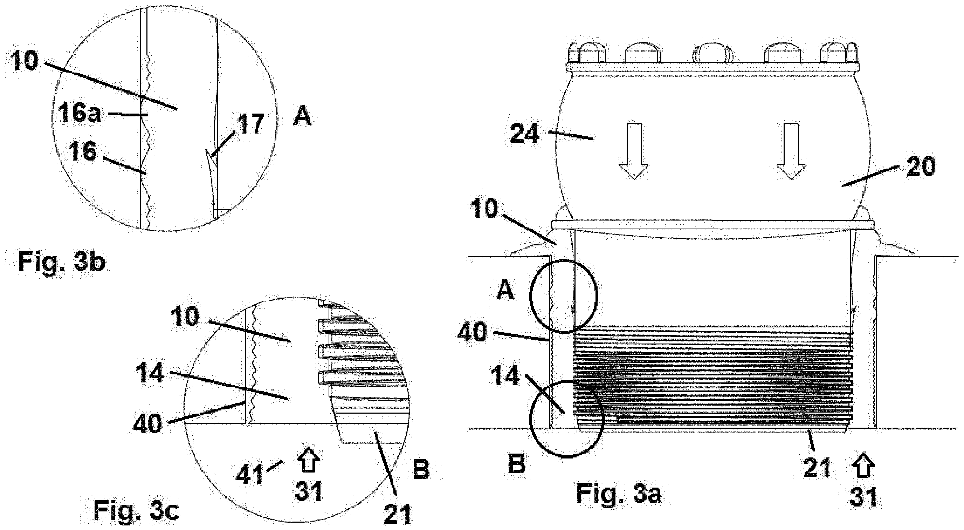

In der Fig. 3a ist eine schematische teilweise geschnittene seitliche Außenansicht eines Anschlussstutzens 20, der in einen Elastomereinsatz 10 bis zu einer ersten Einschraubstellung 31 eingeschraubt ist, gezeigt.

Die Bezugszeichen in Fig. 3a entsprechen denen aus den vorangehenden Figuren.

Der Anschlussstutzen 20 ist in den Elastomereinsatz 10 bis zur ersten Einschraubstellung 31 eingeschraubt. Hierzu interagiert das an der Innenseite 12 des Elastomereinsatzes 10 ausgebildete Innengewinde am Schraubbereich 13 mit dem Außengewinde 23 am Mittelteil 22 des Anschlussstutzens 20.

Durch den in den Elastomereinsatz 10 bis zu einer ersten Einschraubstellung 31 eingeschraubten Anschlussstutzen 20 kommt es zunächst noch nicht dazu, dass der Endabschnitt 14 des Elastomereinsatzes 10 in Richtung des Aufnahmeabschnitts 24 des Anschlussstutzens 20 verlagert ist.

Der in den Elastomereinsatz 10 bis zu einer ersten Einschraubstellung 31 eingeschraubte Anschlussstutzen 20 ragt in dieser Stellung mit seinem Eingriffsende 21 ein kleines Stück weit in den freien Raum 41 des Hauptrohres hinein.

Der Endabschnitt 14 des Elastomereinsatzes 10 ist im Zustand der ersten Einschraubstellung 31 nicht in Richtung des Aufnahmeabschnitts 24 des Anschlussstutzens 20 verlagert und schließt bündig mit der Innenoberfläche des Hauptrohres im Bereich der Queröffnung ab.

In der Fig. 3a sind zwei Details gezeigt, zum einen das Detail A, das in Fig. 3b vergrößert dargestellt ist, und zum anderen das Detail B, das in Fig. 3c vergrößert wiedergegeben ist.

In Fig. 3b ist ein Detail A aus der Fig. 3a in vergrößerter Darstellung gezeigt.

Der Elastomereinsatz 10 weist an seiner Außenseite zwei Dichtelemente 16, 16 a auf, die nach außen von der Außenseite 11 des Dichtelements 10 hervorstehen.

Mit diesen Dichtelementen 16, 16a kann eine fluiddichte Anlage des Elastomereinsatzes 10 an die Laibungsfläche 40 des Hauptrohres hergestellt werden, wenn der Elastomereinsatz 10 an die Laibungsfläche 10 des Hauptrohres angepresst wird.

An der Innenseite des Elastomereinsatzes 10 ist ein Dichtelement 17 in Form einer Lippe ausgebildet, die eine an dem eingeschraubten Anschlussstutzen 20 ausgeformte Dichtfläche kontaktiert und dort eine fluiddichte Verbindung schafft. Das Dichtelement 17 in Form einer Lippe legt sich dazu an die an dem eingeschraubten Anschlussstutzen 20 ausgeformte Dichtfläche an.

In Fig. 3c ist ein Detail B aus der Fig. 3a in vergrößerter Darstellung wiedergegeben.

Der Anschlussstutzen 20 ist in den Elastomereinsatz 10 bis zur ersten Einschraubstellung 31 eingeschraubt. Hierbei kommt es zunächst noch nicht dazu, dass der Endabschnitt 14 des Elastomereinsatzes 10 in Richtung des Aufnahmeabschnitts 24 des Anschlussstutzens 20 verlagert ist.

Das Eingriffsende 21 des in den Elastomereinsatz 10 bis zu einer ersten Einschraubstellung 31 eingeschraubte Anschlussstutzen 20 ragt in dieser Stellung ein kleines Stück in den freien Raum 41 des Hauptrohres hinein.

Der Endabschnitt 14 des Elastomereinsatzes 10 schließt in diesem Zustand bei der ersten Einschraubstellung bündig mit der Innenoberfläche des Hauptrohres im Bereich der Queröffnung ab.

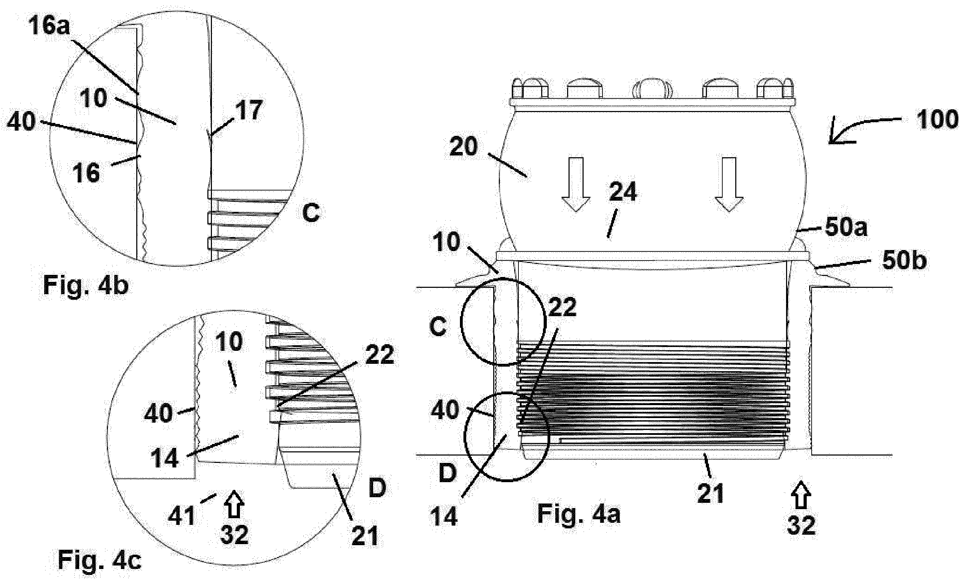

In der Fig. 4a ist eine schematische teilweise geschnittene Außenansicht einer Anschlussvorrichtung 100 gezeigt, bei der ein Anschlussstutzen 20 bis zu einer zweiten Einschraubstellung 32 in einen Elastomereinsatz 10 eingeschraubt ist.

Die Bezugszeichen in Fig. 4a entsprechen denen aus den vorangehenden Figuren.

Durch das vollständige Einschrauben des Anschlussstutzens 20 in den Elastomereinsatz 10 bis zur zweiten Einschraubstellung 32, durch den die Anschlussvorrichtung 100 gebildet ist, ist der Endabschnitt 14 des Elastomereinsatzes 10 in Richtung des Aufnahmeabschnitts 24 des Anschlussstutzens 20 verlagert, so dass der Elastomereinsatz 10 zumindest abschnittsweise gegen den Mittelteil 22 des Anschlussstutzens 20 und gegen die Laibungsfläche 40 der Queröffnung in der Hauptrohrleitung gepresst ist.

Hierbei ist mit den Dichtelementen 16, 16a eine fluiddichte Anlage des Elastomereinsatzes 10 an die Laibungsfläche 40 des Hauptrohres hergestellt, wenn der Elastomereinsatz 10 an die Laibungsfläche 10 des Hauptrohres durch Verlagerung des Endabschnitts 14 des Elastomereinsatzes 10 in Richtung des Aufnahmeabschnitts 24 des Anschlussstutzens 20 angepresst ist.

Bei der Anschlussvorrichtung 100, die durch das vollständige Einschrauben des Anschlussstutzens 20 in den Elastomereinsatz 10 bis zur zweiten Einschraubstellung 32, gebildet ist, kontaktiert das Dichtelement 17 in Form einer Lippe an der Innenseite 12 des Elastomereinsatzes 10 eine an dem eingeschraubten Anschlussstutzen 20 ausgeformte Dichtfläche und legt sich an diese an.

Auf diese Weise ist für die fluiddichte Verbindung des Anschlussstutzens 20 mit dem Elastomereinsatz 10 gesorgt.

Das Erreichen der zweiten Einschraubstellung 32 wird für das installierende Personal durch das Vorsehen von Markierungen 50, 50 b erleichtert, wobei die Markierung 50a am Anschlussstutzen 20 und die Markierung 50 b am Elastomereinsatz 10 angebracht ist. Durch entsprechendes Ausrichten von Anschlussstutzen 20 und Elastomereinsatz 10 beim Einschrauben des Anschlussstutzens 20 in den Elastomereinsatz 10 gemäß der Installationsvorgabe für die Herstellung der Anschlussvorrichtung 100 sind beispielsweise die Markierungen 50a und 50 b in eine aneinander liegende Position bringbar, was anzeigt, dass die zweite Einschraubstellung 32 erreicht ist.

Hierdurch ist eine besonders fluiddichte Verbindung des Anschlussstutzens 20 und des Elastomereinsatzes 10 sichergestellt.

Dargestellt ist dieser Zustand in der Fig. 4b.

In der Fig. 4a sind zwei Details gezeigt, zum einen das Detail C, das in Fig. 4b vergrößert dargestellt ist, und zum anderen das Detail D, das in Fig. 4c vergrößert wiedergegeben ist.

In Fig. 4b ist ein Detail C aus Fig. 4a in vergrößerter Darstellung gezeigt.

Durch die Dichtelemente 16, 16a ist eine fluiddichte Anlage des Elastomereinsatzes 10 an die Laibungsfläche 40 des Hauptrohres hergestellt, wenn der Elastomereinsatz 10 an die Laibungsfläche 10 des Hauptrohres durch Verlagerung des Endabschnitts 14 des Elastomereinsatzes 10 in Richtung des Aufnahmeabschnitts 24 des Anschlussstutzens 20 angepresst ist.

Das Dichtelement 17 in Form einer Lippe an der Innenseite 12 des Elastomereinsatzes 10 legt sich in diesem Einschraubzustand an einer ausgeformten Dichtfläche des eingeschraubten Anschlussstutzens 20 an.

In Fig. 4c ist ein Detail D aus Fig. 4a in vergrößerter Darstellung wiedergegeben.

Durch das vollständige Einschrauben des Anschlussstutzens 20 in den Elastomereinsatz 10 bis zur zweiten Einschraubstellung 32, durch den die Anschlussvorrichtung 100 gebildet ist, ist der Endabschnitt 14 des Elastomereinsatzes 10 in Richtung des Aufnahmeabschnitts 24 des Anschlussstutzens 20 verlagert und vom freien Raum 41 des Hauptrohres wegbewegt worden.

Hierdurch ist der Endabschnitt 14 des Elastomereinsatzes 10 komprimiert, so dass eine radiale Spannung generiert ist, die den Elastomereinsatz 10 zumindest abschnittsweise, insbesondere aber dessen Endabschnitt 14 gegen den Mittelteil 22 des Anschlussstutzens 20 und gegen die Laibungsfläche 40 der Queröffnung der Hauptrohrleitung presst und so Fluiddichtheit herstellt.

### Bezugszeichenliste

- 10: Elastomereinsatz
- 11: Außenseite
- 12: Innenseite
- 13: Schraubbereich
- 14: Endabschnitt
- 15: Öffnung
- 16: Dichtelement
- 16a: Dichtelement
- 17: Dichtelement
- 20: Anschlussstutzen
- 21: Eingriffsende
- 22: Mittelteil
- 23: Außengewinde
- 24: Aufnahmeabschnitt
- 25: Antriebsende
- 26: Außenseite
- 31: erste Einschraubstellung
- 32: zweite Einschraubstellung
- 40: Laibungsfläche
- 41: freier Raum
- 50a: Markierung
- 50b: Markierung
- 100: Anschlussvorrichtung
- 200: Fluidleit-, -aufnahme- und -speichersystem
- A: Detail
- B: Detail
- C: Detail
- D: Detail

## Patentansprüche

1. Anschlussvorrichtung (100) für eine Nebenrohrleitung in Kombination mit einer Queröffnung in einer Hauptrohrleitung, in einem Schacht oder in einer Wand, umfassend: die Hauptrohrleitung mit der Queröffnung, den Schacht mit der Öffnung oder die Wand mit der Öffnung,
J einen hohlstopfenförmigen, relativ weichen Elastomereinsatz (10), dessen Außenseite (11) an die Queröffnung angepasst ist, und dessen Innenseite (12) einen Schraubbereich (13) aufweist, in die ein Anschlussstutzen (20) einschraubbar ist, und einen relativ härteren Anschlussstutzen (20), der ein Eingriffsende (21), ein Mittelteil (22) mit Außengewinde (23), einen Aufnahmeabschnitt (24) und ein Antriebsende (25) aufweist,
**dadurch gekennzeichnet, dass** die Innenseite (12) des Elastomereinsatzes (10) und die Außenseite (26) des Mittelteils (22) des Anschlussstutzens (20) jeweils als Zylindermantelflächen ausgebildet sind, derart, dass der Anschlussstutzen (20) in den Elastomereinsatz (10) einschraubbar ist,
wobei bei montierter Anschlussvorrichtung (100) zunächst der Anschlussstutzen (20) in den Elastomereinsatz (10) bis zu einer ersten Einschraubstellung (31) eingeschraubt ist, ohne dass der Endabschnitt (14) des Elastomereinsatzes (10) in Richtung des Aufnahmeabschnitts (24) des Anschlussstutzens (20) verlagert ist, wobei der Endabschnitt (14) des Elastomereinsatzes (10) in diesem Zustand bei der ersten Einschraubstellung (31) bündig mit der Innenoberfläche der Hauptrohrleitung , des Schachts oder der Wand im Bereich der Queröffnung abschließt, und anschließend der Anschlussstutzen (20) in den Elastomereinsatz (10) bis zu einer zweiten Einschraubstellung (32) eingeschraubt ist, wodurch der Endabschnitt (14) des Elastomereinsatzes (10) in Richtung des Aufnahmeabschnitts (24) des Anschlussstutzens (20) verlagert ist, so dass der Elastomereinsatz (10) zumindest abschnittsweise gegen den Mittelteil (22) des Anschlussstutzens (20) und gegen die Laibungsfläche (40) der Queröffnung in der Hauptrohrleitung, in dem Schacht oder in der Wand gepresst ist.

2. Anschlussvorrichtung (100) nach Anspruch 1, **dadurch gekennzeichnet, dass** die erste Einschraubstellung (31) und / oder die zweite Einschraubstellung (32) an dem Elastomereinsatz (10) und / oder an dem Anschlussstutzen (20) markiert ist bzw. sind.

3. Anschlussvorrichtung (100) nach Anspruch 1 oder 2, **dadurch gekennzeichnet, dass** an der Außenseite (11) des Elastomereinsatzes (10) wenigstens ein Dichtelement (16), bevorzugt eine Mehrzahl von Dichtelementen (16), angeordnet ist bzw. sind.

4. Anschlussvorrichtung (100) nach Anspruch 3, **dadurch gekennzeichnet, dass** wenigstens ein Dichtelement (16) ein unter Zutritt von Feuchtigkeit oder Wasser expandierendes Dichtelement (16a) ist.

5. Anschlussvorrichtung (100) nach Anspruch 4, **dadurch gekennzeichnet, dass** an der Innenseite (12) des Elastomereinsatzes (10) wenigstens ein Dichtelement (17) ausgebildet ist.

6. Anschlussvorrichtung (100) nach Anspruch 4, **dadurch gekennzeichnet, dass** der Elastomereinsatz (10) zumindest abschnittsweise eine zweischichtig ausgebildete Wandung aufweist, wobei bevorzugt die Außenseite (11) des Elastomereinsatzes (10) aus einem weicheren Material besteht oder ein weicheres Material enthält als die Innenseite (12) des Elastomereinsatzes (10), wo der Schraubbereich (13) ausgeformt ist.

7. Anschlussvorrichtung (10) nach einem der vorangehenden Ansprüche, **dadurch gekennzeichnet, dass** der Elastomereinsatz (10) aus einem Elastomermaterial besteht oder ein Elastomermaterial enthält, wobei das Elastomermaterial bevorzugt ein Gummi oder ein Thermoplastisches Elastomer oder ein Kautschuk oder ein Nitrilkautschuk oder ein Butylkautschuk oder ein EPDM (Ethylen-Propylen-Dien-Kautschuk) oder ein SBR (Styrol-Butadien-Kautschuk) oder ein NBR (Nitril-Butadien-Kautschuk) ist und / oder der Anschlussstutzen (20) aus einem Polymermaterial besteht oder ein Polymermaterial enthält, wobei das Polymermaterial bevorzugt ein Thermoplast, und besonders bevorzugt ein Polyolefin, wie beispielsweise ein Polypropylen oder ein Polyethylen oder ein Polybutylen, oder ein Copolymeres der Vorgenannten, oder ein vernetztes Polyolefin, insbesondere ein vernetztes Polyethylen, oder ein Polyvinylchlorid, oder ein Polyurethan ist.

8. Fluidleit-, -aufnahme- und -speichersystem (200) umfassend eine Nebenrohrleitung, eine Hauptrohrleitung und / oder einen Schacht und / oder eine Wand, und eine Anschlussvorrichtung (100) für eine Nebenrohrleitung in Kombination mit einer Queröffnung in einer Hauptrohrleitung, in einem Schacht oder in einer Wand nach einem der Ansprüche 1 bis 7.

## Claims

1. Connection device (100) for a secondary pipeline in combination with a transverse opening in a main pipeline, in a shaft, or in a wall, comprising:
the main pipeline with the transverse opening, the shaft with the opening or the wall with the opening,
a relatively soft elastomer insert (10) in the form of a hollow plug, the outside (11) of which insert is adapted to the transverse opening, and the inside (12) of which has a screw region (13) into which a connection piece (20) can be screwed, and
a relatively harder connection piece (20), which has an engagement end (21), a central part (22) with an external thread (23), a receiving section (24) and a drive end (25),
**characterised in that** the inside (12) of the elastomer insert (10) and the outside (26) of the central part (22) of the connection piece (20) are each designed as cylinder jacket surfaces such that the connection piece (20) can be screwed into the elastomer insert (10),
wherein when the connection device (100) is fitted, first the connection piece (20) is screwed into the elastomer insert (10) up to a first screw-in position (31) without the end section (14) of the elastomer insert (10) being displaced in the direction of the receiving section (24) of the connection piece (20), wherein the end section (14) of the elastomer insert (10) ends flush with the inner surface of the main pipeline, the shaft or the wall in the area of the transverse opening in this state in the first screw-in position (31), and then the connection piece (20) is screwed into the elastomer insert (10) up to a second screw-in position (32), whereby the end section (14) of the elastomer insert (10) is displaced in the direction of the receiving section (24) of the connection piece (20) so that the elastomer insert (10) is pressed at least in sections against the central part (22) of the connection piece (20) and against the soffit surface (40) of the transverse opening in the main pipeline, in the shaft or in the wall.

2. Connection device (100) according to claim 1, **characterised in that** the first screw-in position (31) and/or the second screw-in position (32) is or are marked on the elastomer insert (10) and/or on the connection piece (20).

3. Connection device (100) according to claim 1 or 2, **characterised in that** arranged on the outside (11) of the elastomer insert (10) is or are at least one seal element (16), preferably a plurality of seal elements (16).

4. Connection device (100) according to claim 3, **characterised in that** at least one seal element (16) is a seal element (16a) that expands under the ingress of moisture or water.

5. Connection device (100) according to claim 4, **characterised in that** at least one seal element (17) is formed on the inside (12) of the elastomer insert (10).

6. Connection device (100) according to claim 4, **characterised in that** the elastomer insert (10) has a wall formed in two layers at least in sections, wherein preferably the outside (11) of the elastomer insert (10) consists of a softer material or contains a softer material than the inside (12) of the elastomer insert (10), where the screw region (13) is formed.

7. Connection device (100) according to any one of the preceding claims, **characterised in that** the elastomer insert (10) consists of an elastomer material or contains an elastomer material, wherein the elastomer material is preferably a gum or a thermoplastic elastomer or a natural rubber or a nitrile rubber or a butyl rubber or an EPDM (ethylene propylene diene monomer rubber) or an SBR (styrene butadiene rubber) or an NBR (nitrile butadiene rubber) and/or the connection piece (20) consists of a polymer material or contains a polymer material, wherein the polymer material is preferably a thermoplastic, and particularly preferably a polyolefin, such as a polypropylene or a polyethylene or a polybutylene, for example, or a copolymer of the aforesaid, or a cross-linked polyolefin, in particular a cross-linked polyethylene, or a polyvinyl chloride, or a polyurethane.

8. Fluid-carrying, -receiving and storage system (200) comprising a secondary pipeline, a main pipeline and/or a shaft and/or a wall, and a connection device (100) for a secondary pipeline in combination with a transverse opening in a main pipeline, in a shaft or in a wall according to any one of claims 1 to 7.

## Revendications

1. Dispositif de raccordement (100) pour un conduit secondaire en combinaison avec une ouverture transversale dans un conduit principal, dans un puits ou dans une paroi, comprenant :
le conduit principal avec l'ouverture transversale, le puits avec l'ouverture et la paroi avec l'ouverture,
une garniture en élastomère (10) relativement molle, en forme de bouchon creux, dont le côté extérieur (11) est adapté à l'ouverture transversale et dont le côté intérieur (12) présente une zone de vissage (13), dans laquelle une tubulure de raccordement (20) peut être vissée, et
une tubulure de raccordement (20) relativement plus dure, qui présente une extrémité de prise (21), une partie centrale (22) avec un filetage extérieur (23), une section de logement (24) et une extrémité d'entraînement (25),
**caractérisé en ce que** le côté intérieur (12) de la garniture en élastomère (10) et le côté extérieur (26) de la partie centrale (22) de la tubulure de raccordement (20) sont réalisés respectivement en tant que surfaces de gaine cylindrique de telle manière que la tubulure de raccordement (20) peut être vissée dans la garniture en élastomère (10),
dans lequel, pour un dispositif de raccordement (100) monté, d'abord la tubulure de raccordement (20) est vissée dans la garniture en élastomère (10) jusqu'à une première position de vissage (31) sans que la section d'extrémité (14) de la garniture en élastomère (10) ne soit déplacée en direction de la section de logement (24) de la tubulure de raccordement (20), dans lequel la section d'extrémité (14) de la garniture en élastomère (10) se termine, dans ledit état, dans la première position de vissage (31), en affleurement avec la surface intérieure du conduit principal, du puits ou de la paroi dans la zone de l'ouverture transversale, puis la tubulure de raccordement (20) est vissée dans la garniture en élastomère (10) jusqu'à une deuxième position de vissage (32),
ce qui permet de déplacer la section d'extrémité (14) de la garniture en élastomère (10) en direction de la section de logement (24) de la tubulure de raccordement (20) de telle sorte que la garniture en élastomère (10) est pressée au moins par endroits contre la partie centrale (22) de la tubulure de raccordement (20) et contre la surface d'intrados (40) de l'ouverture transversale dans le conduit principal, dans le puits ou dans la paroi.

2. Dispositif de raccordement (100) selon la revendication 1, **caractérisé en ce que** la première position de vissage (31) et/ou la deuxième position de vissage (32) est marquée ou sont marquées sur la garniture en élastomère (10) et/ou sur la tubulure de raccordement (20).

3. Dispositif de raccordement (100) selon la revendication 1 ou 2, **caractérisé en ce qu'**au moins un élément d'étanchéité (16), de manière préférée une pluralité d'éléments d'étanchéité (16), est ou sont disposés sur le côté extérieur (11) de la garniture en élastomère (10).

4. Dispositif de raccordement (100) selon la revendication 3, **caractérisé en ce qu'**au moins un élément d'étanchéité (16) est un élément d'étanchéité (16a) s'expansant à l'entrée d'humidité ou d'eau.

5. Dispositif de raccordement (100) selon la revendication 4, **caractérisé en ce qu'**au moins un élément d'étanchéité (17) est réalisé sur le côté intérieur (12) de la garniture en élastomère (10).

6. Dispositif de raccordement (100) selon la revendication 4, **caractérisé en ce que** la garniture en élastomère (10) présente au moins par endroits une paroi réalisée en deux couches, dans lequel de manière préférée le côté extérieur (11) de la garniture en élastomère (10) est constitué d'un matériau plus mou ou contient un matériau plus mou que le côté intérieur (12) de la garniture en élastomère (10), où la zone de vissage (13) est moulée.

7. Dispositif de raccordement (10) selon l'une quelconque des revendications précédentes, **caractérisé en ce que** la garniture en élastomère (10) est constituée d'un matériau en élastomère ou contient un matériau en élastomère, dans lequel le matériau en élastomère est de manière préférée un caoutchouc ou un élastomère thermoplastique ou un caoutchouc ou un caoutchouc nitrile ou un caoutchouc butyle ou un EPDM (caoutchouc d'éthylène-propylène-diène) ou un SBR (caoutchouc de styrène-butadiène) ou un NBR (caoutchouc de nitrile-butadiène) et/ou la tubulure de raccordement (20) est constituée d'un matériau en polymère ou contient un matériau en polymère, dans lequel le matériau en polymère est de manière préférée une matière thermoplastique, et de manière particulièrement préférée une polyoléfine, par exemple un polypropylène ou un polyéthylène ou un polybutylène ou un copolymère des éléments susmentionnés, ou une polyoléfine réticulée, en particulier un polyéthylène réticulé, ou un polychlorure de vinyle ou un polyuréthane.

8. Système d'acheminement, de logement et de stockage de fluide (200) comprenant un conduit secondaire, un conduit principal et/ou un puits et/ou une paroi, et un dispositif de raccordement (100) pour un conduit secondaire en combinaison avec une ouverture transversale dans un conduit principal, dans un puits ou dans une paroi selon l'une quelconque des revendications 1 à 7.
